# EUROPÄISCHE PATENTSCHRIFT

(11) **EP 2 403 995 B1**
(45) Veröffentlichungstag und Bekanntmachung des Hinweises auf die Patenterteilung: **26.08.2015**
(21) Anmeldenummer: 10706632.6
(22) Anmeldetag: 03.03.2010
(51) Int. Cl.: E02B 3/10, E02D 27/40

(54) **VERFAHREN ZUR STABILISIERUNG EINES WEICHEN GRUNDES FÜR EINEN DAMM ODER EINE HALDE, UND EINHEIT BESTEHEND AUS EINEM NACH DIESEM VEFAHREN STABILISIERTEN GRUND UND EINEM DAMM ODER EINER HALDE**
METHOD FOR STABILIZING A SOFT GROUND FOR A DAM OR A HEAP, AND UNIT CONSISTING OF A GROUND STABILIZED BY THIS METHOD AND OF A DAM OR A HEAP
PROCÉDÉ DE STABILISATION D'UN TERRAIN MEUBLE POUR UN BARRAGE OU UN TERRE-PLEIN, ET ENSEMBLE CONSTITUÉ D'UN TERRAIN STABILISÉ SELON CE PROCÉDÉ ET D'UN BARRAGE OU D'UN TERRIL

(30) Priorität: 03.03.2009 DE 102009011119
(43) Veröffentlichungstag der Anmeldung: 11.01.2012
(73) Patentinhaber: Huesker Synthetic GmbH, 48712 Gescher (DE)
(72) Erfinder: ALEXIEW, Dimiter, 48712 Gescher (DE)
(74) Vertreter: Freischem, Werner
(86) Internationale Anmeldenummer: PCT/EP2010/052658
(87) Internationale Veröffentlichungsnummer: WO 2010/100176

(56) Entgegenhaltungen:
- WO-A1-92/05318
- US-A1- 2007 212 173

## Beschreibung

Die Erfindung betrifft ein Verfahren zur Stabilisierung eines weichen Bodens für einen Damm oder eine Halde gemäß dem Oberbegriff der Patentansprüche 1 und 4. Insbesondere ein weicher, nachgiebiger Boden. z.B. aus Klel oder Torf und ein darauf durch Aufschüttung hergestellter Damm, über den eine Straße, ein Schienengleis oder ein entsprechender Verkehrsweg geführt wird, soll durch dieses Verfahren stabilisiert werden. Aber auch für eine durch Aufschüttung von Erz, Kohle, Koks, Kies, Sand oder dergleichen gebildete Halde, ein nachgiebiger Boden, soll durch dieses Verfahren stabilisiert werden.

Beim Aufschütten des Damms oder der Halde auf weichem, nachgiebigem Boden wird der weiche Boden unter der Last der Aufschüttung nach unten und nach außen zur Seite des geringsten Widerstandes gedrückt. Diese Bewegungen des Untergrundes führen zu unzulässigen Setzungen, Formänderungen und lokalen Brüchen und entsprechenden Beschädigungen des Damms oder der Halde. Ferner werden die über den Damm geführten Verkehrswege oder Versorgungsleitungen zerstört. Schließlich können neben dem Damm oder der Halde befindliche Kaimauern oder Kellerwände von dem weichen, fließenden Boden eingedrückt werden. Auch dringt Material der Aufschüttung in unterschiedlicher Tiefe in den weichen Boden ein. Dies verhindert bei Halden ein sauberes Abräumen.

Aus der US 2007/0212173 A1, die den nächstkommenden Stand der Technik bildet, ist ein Verfahren zur Stabilisierung eines durch Aufschüttung gebildeten Deiches oder Dammes bekannt, bei dem zu beiden Seiten der geplanten Aufschüttung tief in den weichen Boden mittels Geo-Set®-Technik Reihen von Boden-Zement-Säulen eingeformt werden. Diese Boden-Zement-Säulen sind etwa 3,5 bis 4 m dick, haben in der Reihe einen Abstand von über 1 m und erstrecken sich bis in Höhe der Oberfläche des welchen Bodens oder des Geländes. Mindestens In einige dieser Boden-Zement-Säulen jeder Reihe werden Bewehrungselemente, insbesondere im Querschnitt, H-förmige Stahlprofile eingebracht, die oben aus den Boden-Zement-Säulen herausragen.

Die Bewehrungsprofile von einander gegenüber befindlichen Boden-Zement-Säulen sind zur Aufnahme von Zugkräften über Stahlkabel oder Stahlträger miteinander verbunden.

Bei einer Ausführungsform, bei der sich auf dem welchen Boden eine über 2 m dicke höher belastbare Kruste oder Straßendecke befindet, sind die Zugkräfte aufnehmenden Stahlkabel etwa 1,5 m über der Geländehöhe angeordnet.

Bei einer zweiten Ausführungsform sind an Stelle der Stahlkabel H- oder T-förmige Stahlprofile vorgesehen, die sich auf die Oberseite der Boden-Zement-Säulen abstützen. Über diese Stahlträger wird eine Matte angeordnet, weiche die Last der Aufschüttung auf die Stahlträger und diese auf die Boden-Zement-Säulen überträgt.

Dieses bekannte Stabilisierungsverfahren Ist relativ aufwendig und nur in Gegenden einsetzbar, In denen der weiche Boden zur Erstellung von Boden-Zement-Säulen geeignet ist.

Aus der japanischen Offenlegungsschrift JP 022 69 216 ist ein Verfahren zur Stabilisierung einer Aufschüttung auf weichem, nachgiebigem Boden bekannt, bei dem an der Grenze der geplanten Aufschüttung an zwei einander gegenüberliegenden Seiten der geplanten Aufschüttung Widerstandskörper angeordnet werden und auf die Oberfläche des weichen Bodens Geotextilbahnen verlegt und mit den Widerstandskörpern an beiden Seiten verbunden werden. Die Widerstandskörper werden aus 20 cm dicken und 2 m hohen Platten vorzugsweise aus Beton gebildet, die in ca. 1 m tiefe, in den welchen Boden eingebrachte Gräben eingesetzt werden. An diese Widerstandskörper werden Geotextilbahnen befestigt, welche die Oberfläche des weichen Bodens zwischen den Widerstandskörpern abdecken. Die Befestigung der Geotextilbahnen an die Widerstandskörper erfolgt durch Umwickeln der Widerstandskörper. Zur Fixierung der Widerstandskörper wird an den Innenseiten der Widerstandskörper eine etwa 1 m hohe Voraufschüttung aufgebracht, durch welche das Geotextil gegen den weichen Boden gedrückt wird. Die in den weichen Boden eingesetzten Widerstandskörper können keine größeren Zugkräfte aufnehmen, well sie nur ca. 1 m tief Im weichen Boden eingesetzt sind und sich nach innen neigen, wenn größere Zugkräfte auf sie einwirken. Es sollen auch die Geotextilbahnen keine größeren Zugkräfte aufnehmen, well jedes beliebige für das Bauwesen verwendete Material zur Abdeckung des welchen Bodens geeignet sein soll, wie beispielsweise Gestrick, Geflecht oder Vliesstoffe, Stoffbahnen also, die sich unter Zugbelastung stark dehnen. Die Befestigung der Geotextilbahnen durch Umwickeln der Widerstandskörper bewirkt, dass Zugkräfte erst aufgenommen werden können nach Aufbringung der Voraufschüttung. Dieses Verfahren ist nicht dafür geeignet, hohe Belastungen, beispielsweise auch dynamische Kräfte, die von einer über den aufgeschütteten Damm geführten Straße verursacht werden, aufzunehmen oder zu reduzieren. Bei stärkerer Belastung wird der weiche Boden unter den zu beiden Selten der Aufschüttung angeordneten Widerstandskörpern hinweg seitlich ausweichen. Deshalb kann dieses bekannte Verfahren nur einen Teil der durch die Aufschüttung bewirkten Belastung des Bodens auffangen.

Der Erfindung liegt die Aufgabe zugrunde, die Nachteile der bekannten Verfahren zu vermeiden und ein Verfahren zu schaffen, das schnell und zuverlässig größere Verformungen und Setzungen während und nach dem Aufschütten einer Halde oder eines Dammes auf welchem und nachgiebigem Boden vermeidet. Ferner soll bei Halden ein präzises maschinelles Abräumen mittels Abräumbaggern oder Förderbrücken möglich sein.

Diese Aufgabe wird nach der Erfindung durch die Gesamtheit der Merkmale des Anspruchs 1 oder durch die Gesamtheit der Merkmale des Anspruchs 4 gelöst.

An der Grenze der geplanten Aufschüttung werden zur Bildung des Dammes oder der Halde an mindestens zwei einander gegenüberliegenden Seiten der geplanten Aufschüttung tief in den Boden getriebene, aus Stahlprofilen, Spundbohlen oder Pfählen sich zusammensetzende, biegesteife Wände errichtet, und in Höhe der Oberfläche des weichen Bodens werden hochfeste, biegeweiche Zugglieder, insbesondere Selle, Fadenbündel, Ketten, Bänder parallel zueinander auf den weichen Boden ausgelegt und mit den Wänden möglichst unnachgiebig verbunden werden und zwischen den Wänden eine auf der Oberfläche des weichen Bodens und den Zuggliedern aufliegende Stoffbahn oder Kunststoff-Folie angeordnet wird, welche den weichen Boden von der Aufschüttung trennt.

Die trennende Stoffbahn, mit der der nachgiebige Untergrund abgedeckt wird, kann von einer Kunststoff-Folie, einem Kunststoff-Bändchengewebe, einem Geoviles oder dergleichen gebildet werden. Um das Verlegen der Zugglieder und der trennenden Stoffbahn zu vereinfachen, können die hochfesten Zugglieder mit der trennenden Stoffbahn verbunden werden.

An Stelle der hochfesten biegeweichen Zugglieder und der trennenden Stoffbahn können die Wände über breite hochfeste Geokunststoffbahnen möglichst unnachgiebig verbunden werden.

Bei diesen insbesondere gewebten Geotextilbahnen können in Belastungsrichtung z.B. die Kettfäden aus hochfesten Synthetikfäden bestehen, während die dazu rechtwinklig verlaufenden Fäden, z.B. die Schussfäden, wenig belastbar sind und beispielsweise flache Kunststoffbändchen sind.

Diese Geokunststoffbahnen werden überlappend oder vernäht, faltenfrei und vollflächig auf die Oberfläche des weichen, nachgiebigen Bodens verlegt und mit den beiden Wänden verbunden. Geeignet sind auch Verbundstoffe, bei denen die Last aufnehmenden, hoch zugfesten Synthetikfäden ohne Krümmung in der oder auf der Stoffbahn liegen und aufgenäht oder aufgeraschelt sind.

Die biegesteifen Wände werden zweckmäßigerweise von Siehlprofilen, Spundbohlen oder Pfählen gebildet der Wände werden, die möglichst bis in den festen Boden getrieben werden. Die Wände können geschlossen sein, indem die Stahlprofile Ineinandergreifen oder einander berühren. Die Wände können aber auch im begrenzten Umfang offen sein.

Falls eine feste Bodenschicht zu tief liegt, kann das ganze System auch "freischwimmend" Im weichen Boden vorgesehen sein. Weil die biegesteifen Wände relativ tief, z.B. 6 bis 20 m, In den weichen Boden reichen, gehen diese Wände Im tiefen Bereich des welchen Bodens nicht oder nur sehr schwer auseinander, obwohl der nachgiebige Boden im höheren Bereich infolge der Belastung durch den aufgeschütteten Damm gegen die Innenseiten der Wände drückt.

Bei Belastung des welchen Bodens durch den aufgeschütteten Damm oder die aufgeschüttete Halde sinkt der welche Boden etwas nach unten und drückt gleichzeitig gegen die Innenseiten der beiden Wände, wodurch die Wände Insbesondere im oberen Bereich nach außen gedrückt werden. Weil sich die Zugglieder gleichzeitig unter der Belastung der Aufschüttung nach unten durchbiegen, ziehen sie die Wände an ihrem oberen Bereich nach Innen, also in die entgegengesetzte Richtung. Je höher die Aufschüttung Ist, desto größer sind die Belastung des welchen Bodens, dessen Setzung und der Druck auf die Innenseiten der beiden Wände. Dementsprechend stelgt aber auch die Zugkraft In den die Wände verbindenden Zuggliedern. Somit generiert die zunehmende Aufschüttung nicht nur Kräfte, die die Wände auseinanderbewegen, sondern auch gleichzeitig Haltekräfte durch die Zugglieder. Es entsteht ein selbstregulierendes System, das sich immer wieder im Gleichgewicht befindet. Der zunehmende Zusammenhalt der Wände resultiert in verbesserten Stabilitäten und reduzierten Verformungen oder Setzungen.

Falls eine unerwünschte Bodenbewegung nur quer zum geplanten Damm zu befürchten ist, dann sind die beiden biegesteifen Wände rechtwinklig zu dieser Richtung anzuordnen.

Ist die unerwünschte Bodenbewegung in allen Richtungen zu befürchten, dann können die Wände im Rechteck, im Quadrat oder im Kreis angeordnet werden, wobei die von Wand zu Wand sich erstreckenden Zugglieder sich kreuzen.

Um die trennende Stoffbahn und die Zugglieder oder die in einer Richtung bei geringer Dehnung hoch belastbare Geotextilbahn schnell und zuverlässig mit den Wänden zu verbinden, sind in Höhe der Oberfläche des weichen Bodens an den Innenseiten der Wände längs verlaufende Innenprofile vorgesehen. Diese können als Klemmschienen ausgebildet sein, in denen die Ränder der trennenden Stoffbahn und die Zugglieder oder die Ränder der Geotextilbahn eingeklemmt werden.

Diese Innenprofile können auch drehbar und feststellbar gelagerte Rohre sein, um welche die Enden der Geotextilbahn gewickelt werden. Durch entsprechendes Verdrehen eines Rohres kann die verlegte Geotextilbahn strammgezogen werden und mit einer kleinen Vorspannung belastet werden. Mittels eines Bolzens oder Splintes kann das Rohr fixiert werden.

Die Innenprofile können aber auch oben offene U-Profile sein, in welche die Ränder der verlegten Geotextilbahn einbetoniert oder mittels erhärtender Kunststoffe fixiert werden.

In der folgenden Beschreibung werden Ausführungsbeispiele der Erfindung unter Bezugnahme auf die Zeichnungen näher erläutert. Die Zeichnungen zeigen in:
- Fig. 1: eine Schnittansicht eines Dammes mit Untergrund einer ersten Ausführungsform;
- Fig. 2: eine Draufsicht auf die Basis des Dammes nach Fig. 1;
- Fig. 3: eine Schnittansicht eines Dammes mit Untergrund einer zweiten Ausführungsform;
- Fig. 4: eine Draufsicht auf die Basis des Dammes nach Fig. 3;
- Fig. 5: Seitenansicht eines als Klemmschiene ausgebildeten Innenprofils;
- Fig. 6: Seitenansicht eines als Wickelrohr ausgebildeten Innenprofils
- Fig. 7: Seitenansicht eines zweiten als Wickelrohr ausgebildeten Innenprofils
- Fig. 8: Seitenansicht eines U- oder wannenförmigen Innenprofils

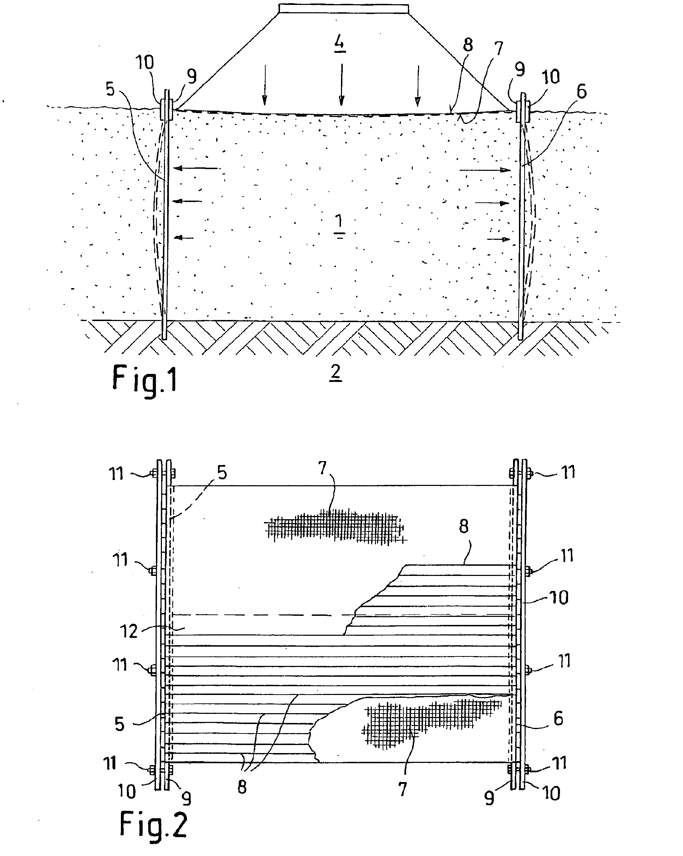

Bei dem Ausführungsbeispiel nach den Fig. 1 und 2 hat der geplante Damm eine Höhe von 3,80 m und eine Basisbreite von 12,00 m. Der weiche nachgiebige Untergrund 1 erstrecke sich bis in eine Tiefe von etwa 7,00 m. Die zum Einsatz kommenden Pfähle oder Spundbohlen zur Errichtung der biegesteifen Wände 5 und 6 sind etwa 8,00 m lang und erstrecken sich etwa 0,5 m tief in den festen Boden 2. Auf der Oberfläche 3 des weichen Bodens 1 zwischen den Wänden 5 und 6 beziehungsweise auf der Basis des aufzuschüttenden Dammes oder der Halde wird eine Stoffbahn 7 ausgelegt, welche die Aufschüttung 4 vom weichen Boden 1 trennt. Ferner sind die Wände 5 und 6 über Zugglieder 8 möglichst unnachgiebig miteinander verbunden.

Die Verbindung der trennenden Stoffbahn 7 und der Zugglieder 8 mit den Wänden 5 und 6 erfolgt über in Höhe der Oberfläche 3 des weichen Bodens 1 längs verlaufende Innenprofile 9, die mit den Wänden 5 und 6 verbunden sind. Diese Innenprofile 9 können als Klemmschienen ausgebildet sein, in welche die Stoffbahnen 7 und die Zugglieder 8 eingeklemmt werden. Damit die Innenprofile 9 nicht an jeder Spundbohle befestigt werden muss, wird in Höhe des Innenprofils 9 ein Außenprofil 10 angeordnet, das durch die Wände 5 und 6 hindurch mittels Schrauben 11 oder Nieten mit dem zugeordneten Innenprofil 9 verbunden wird. Dieses Außenprofil 10 verteilt die vom Innenprofil 9 aufgefangenen Zugkräfte auf die Außenseiten der Wände 5,6.

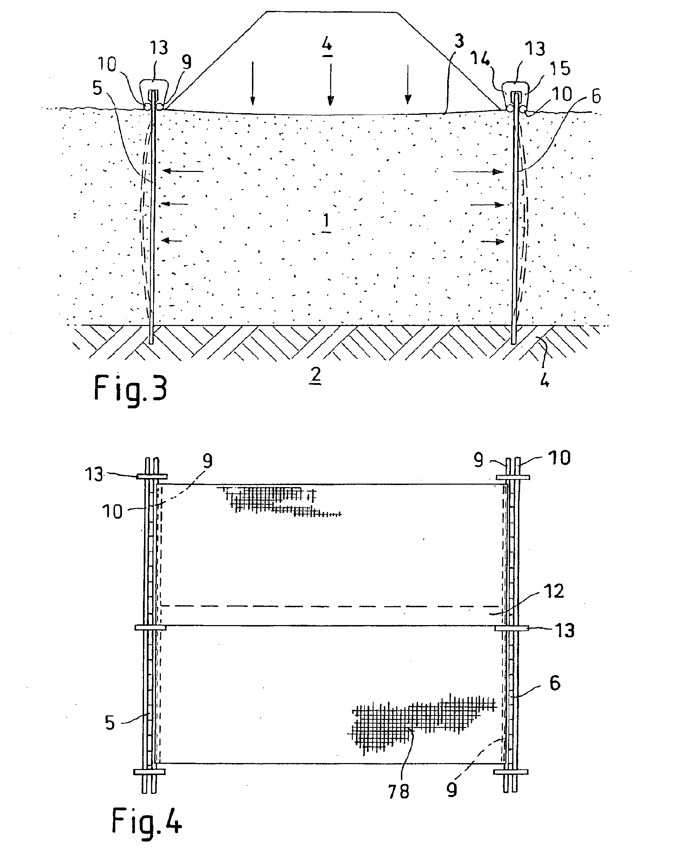

Bei der Ausführungsform nach den Fig. 3 und 4 werden die trennenden Stoffbahnen und die Zugglieder von ca. 5,00 m breiten Geotextilbahnen 78 gebildet, deren Last tragenden, hochfesten Fäden in Längsrichtung der Geotextilbahn verlaufen und von den Kettfäden eines Gewebes gebildet werden. Die nebeneinander liegenden Geotextilbahnen 78 überlappen sich in einer Breite von beispielsweise 30 bis 50 cm oder sie werden an ihren Kanten miteinander vernäht.

Zur Übertragung der an den Innenprofilen 9 wirkenden Zugkräfte auf die Außenseiten der Wände 5 und 6 dienen U-förmige Bügel 13, an deren Innenschenkeln 14 die längs verlaufenden Innenprofile 9 und an deren Außenschenkeln 15 die Außenprofile 10 befestigt sind.

Mit Hilfe dieser Ausführung kann die unnachgiebige Verbindung der Zugglieder 8 und der trennenden Stoffbahn 7 beziehungsweise der Geokunststoffbahn 78 mit den Innenprofilen 9 vorgefertigt werden. Erst auf der Baustelle können die Bügel 13 mit den Innenprofilen 9 und den Außenprofilen 10 über die aus dem weichen Boden 1 herausragenden Wände 5 und 6 gestülpt werden.

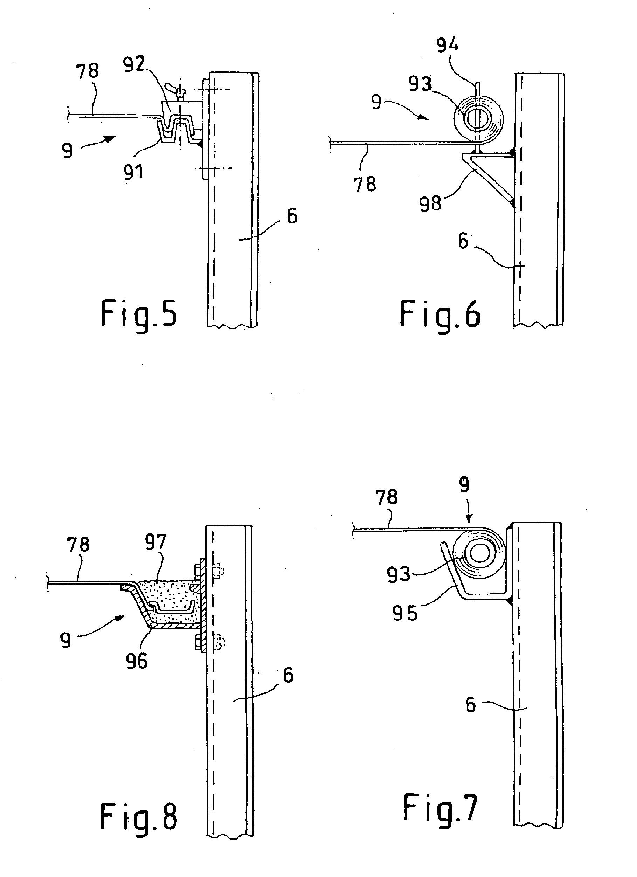

Die Fig. 5 zeigt ein Innenprofil, das als Klemmschiene 91 ausgebildet ist. Der Rand der Geosynthetikmatte 78 wird zwischen den unteren Teil der Klemmschiene 91 und den oberen Teil 92 eingeklemmt. Die beiden Teile 91,92 können mittels Schraubspindeln oder dergleichen mit großer Kraft gegeneinander gepresst werden. Die Kontaktflächen der beiden Teile 91,92, zwischen denen der Rand der Geokunststoffmatte 79 eingeklemmt wird, kann im Querschnitt V- oder W-förmig sein.

Bei den Ausführungsformen nach den Fig. 6 und 7 sind die in Höhe der Basis 3 längs verlaufenden Innenprofile 9 Rohre 93, um welche die daran befestigten Ränder der Geokunststoffmatte 78 gewickelt sind.

In Fig. 6 wird das Rohr 93 von Zapfen oder Dornen 94 gehalten, die in Abständen an den Wänden 6 über Konsolen 98 befestigt sind und in Öffnungen greifen, die am Rohr 93 in verschiedenen Winkelstellungen angebracht sind.

Bei der Ausführungsform nach Fig. 7 wird das Rohr 93 mit dem aufgewickelten Rand der Geokunststoffmatte 78 von V-förmigen Haken 95 gehalten, die in Abständen an den Wänden 6 befestigt sind. In diesen V-förmigen Haken 95 wird das Rohr 93 mit Wickel sich selbsthemmend gehalten. Auch hier kann das Rohr 93 mittels eines Splints gesichert werden.

Bei der Ausführungsform nach Fig. 8 ist das Innenprofil 9 eine oben offene Rinne, in welche der Rand der Geokunststoffmatte 78 durch Beton 97 oder erhärtendem Kunststoff gehalten ist.

### Bezugszeichenliste

- 1: weicher nachgiebiger Boden
- 2: fester Boden
- 3: Basis der Aufschüttung, Oberfläche des weichen Bodens
- 4: Aufschüttung
- 5: Wand
- 6: Wand
- 7: trennende Stoffbahn
- 8: Zugglieder
- 9: Innenprofil
- 10: Außenprofile
- 11: Schrauben
- 12: Überlappungsbereich
- 13: U-förmiger Bügel
- 14: Innenschenkel
- 15: Außenschenkel

- 78: Geokunststoffbahn
- 91: Klemmschiene
- 92: oberes Teil
- 93: Rohr
- 94: Zapfen oder Dorn
- 95: Haken
- 97: Beton oder erhärtender Kunststoff
- 98: Konsolen

## Patentansprüche

1. Verfahren zur Stabilisierung eines weichen, nachgiebigen Bodens (1) für einen aufzuschüttenden Damm oder eine Halde, wobei an der Grenze der geplanten Aufschüttung (4) zur Bildung des Dammes oder der Halde an mindestens zwei einander gegenüberliegenden Seiten der geplanten Aufschüttung biegesteife Wände (5,6) errichtet werden und In Höhe der Oberfläche (3) des welchen Bodens (1) hochfeste Zugglieder, parallel zueinander auf den weichen Boden (1) ausgelegt und mit den Wänden (5,6) möglichst unnachgiebig verbunden werden und zwischen den Wänden (5,6) eine auf der Oberfläche (3) des welchen Bodens (1) und den Zuggliedern (8) aufliegende Stoffbahn (7) oder Kunststoff-Folie angeordnet wird, welche den weichen Boden (1) von der Aufschüttung (4) trennt, **dadurch gekennzeichnet, dass** die Wände tief in den Boden (1) getrieben und aus Stahlprofilen, Spundbohlen oder Pfählen zusammengesetzt sind, und dass die Zugglieder biegeweiche Zugglieder (8), Insbesondere Seile, Fadenbündel, Ketten, Bänder sind.

2. Verfahren nach Anspruch 1, **dadurch gekennzeichnet, dass** die trennende Stoffbahn (7) und die hochfesten Zugglieder (8) miteinander verbunden sind.

3. Verfahren nach Anspruch 1, **dadurch gekennzeichnet, dass** die Zugglieder (8) auf die trennenden Stoffbahnen (7) aufgeraschelt oder aufgenäht sind.

4. Verfahren zur Stabilisierung eines weichen, nachgiebigen Bodens (1) für einen aufzuschüttenden Damm oder eine Halde, **dadurch gekennzeichnet, dass** an der Grenze der geplanten Aufschüttung (4) zur Bildung des Dammes oder der Halde an mindestens zwei einander gegenüberliegenden Seiten der geplanten Aufschüttung biegesteife Wände (5,6) errichtet werden und in Höhe der Oberfläche (3) des weichen Bodens (1) hochfeste Geokunststoffbahnen (78) faltenfrei auf den weichen Boden (1) ausgelegt und mit den Wänden (5,6) möglichst unnachgiebig verbunden werden, **dadurch gekennzeichnet, dass** die Wände tief in den Boden (1) getrieben und aus Stahlprofilen, Spundbohlen oder Pfählen zusammengesetzt sind, und dass die hochfesten Geokunststoffbahnen (78) biegeweiche Zugglieder (8) und eine dichte, trennende Stoffbahn (7) bilden.

5. Verfahren nach Anspruch 4, **dadurch gekennzeichnet, dass** die hochfesten Geokunststoffbahnen (78) Gewebe sind, deren Kettfäden dehnsteif sind und die biegeweichen Zugglieder (8) bilden und die Schussfäden das Gewebe zu einer ausreichend dichten, trennenden Stoffbahn (7) machen.

6. Verfahren nach einem der Ansprüche 1 bis 5, **dadurch gekennzeichnet, dass** die Stahlprofile, Spundbohlen oder Pfähle der Wände (5,6) bis in den festen Boden (2) getrieben werden.

7. Verfahren nach einem der Anspruche 1 bis 6, **dadurch gekennzeichnet, dass** die biegesteifen Wände (5, 6) im Rechteck, Im Quadrat oder im Kreis angeordnet werden, wobei die von Wand zu Wand verlaufenden Zugglieder sich kreuzen.

8. Verfahren nach einem der Ansprüche 1 bis 7, **dadurch gekennzeichnet, dass** etwa in Höhe der Oberfläche (3) des weichen Bodens (1) an den Innenseiten der Wände (5 und 6) längs verlaufende Innenprofile (9) befestigt sind, an denen die Enden der trennenden Stoffbahnen (7) und der Zugglieder (8) beziehungsweise der hochfesten Geokunststoffbahnen (78) befestigt werden.

9. Verfahren nach Anspruch 8, **dadurch gekennzeichnet, dass** in Höhe der längs verlaufenden Innenprofile (9) auf den Außenseiten der Wände (5 und 6) Last verteilende Außenprofile (10) angeordnet werden, die mit den Innenprofilen (9) mittels Schrauben (11) oder Nieten verbunden werden.

10. Verfahren nach Anspruch 8, **dadurch gekennzeichnet, dass** über die aus dem welchen Boden herausragenden Wände (5 und 6) U-förmige Bügel (12) gestülpt werden, die an ihren inneren Schenkeln (13) das Innenprofil (9) tragen und die sich mit ihren äußeren Schenkeln (14) an den Außenseiten der Wände (5 und 6) abstützen.

11. Verfahren nach einem der Ansprüche 9 bis 10, **dadurch gekennzeichnet, dass** das Innenprofil (9) eine Schiene ist, an welcher die Enden der trennenden Stoffbahn (7) und der Zugglieder (8) oder der Geokunststoffbahn (78) durch Klemmung befestigt sind.

12. Verfahren nach einem der Ansprüche 1 bis 11, **dadurch gekennzeichnet, dass** mindestens ein Ende der trennenden Stoffbahnen (7) und der Zugglieder (8) oder der hochfesten Geokunststoffbahn (78) durch Umwickeln der Innenprofile (9) an den Innenprofilen (9) befestigt werden.

13. Verfahren nach Anspruch 12, **dadurch gekennzeichnet, dass** das Innenprofil (9) ein Rohr ist, das um seine Längsachse drehbar gelagert und feststellbar ist.

14. Einheit, bestehend aus einem Boden, stabilisiert durch das Verfahren nach einem der Ansprüche 1 bis 3 und 6 bis 13 und einem Damm oder einer Halde, wobei zu beiden Seiten der den Damm oder die Halde bildenden Aufschüttung (4) biegesteife Wände (5,6) in einen welchen, nachgiebigen Boden (1) getrieben sind und die beiden Wände (5 und 6) in Höhe der Oberfläche (3) des weichen Bodens (1) über hochfeste Zugglieder (8) möglichst unnachgiebig verbunden sind und die Zugglieder (8) und die Oberfläche (3) des weichen Bodens (1) zwischen den Wänden (5 und 6) von einer trennenden Stoffbahn oder Kunststoff-Folie (7) abgedeckt ist, **dadurch gekennzeichnet, dass** die Wände sich aus Stahlprofilen, Spundbohlen oder Pfählen zusammensetzen und die Zugglieder biegeweich sind.

15. Einheit bestehend aus einem Boden, stabilisiert durch das Verfahren nach einem der Ansprüche 4 bis 13 und einem Damm oder einer Halde, **dadurch gekennzeichnet, dass** die trennende Stoffbahn (7) und die hochfesten, biegeweichen Zugglieder (8) von einer Geokunststoffbahn (78) gebildet sind.

## Claims

1. Method for stabilising a soft, pliable ground (1) for a dam to be filled up or a heap, wherein walls (5, 6) which are resistant to bending are erected at the boundary of the planned fill (4) for formation of the dam or the heap on at least two opposing sides of the planned fill and, at the height of the surface (3) of the soft ground (1), high-strength tension members are laid out on the soft ground (1) parallel to one another and are connected to the walls (5, 6) in as rigid a manner as possible and a length of fabric (7) or plastic film lying on the surface (3) of the soft ground (1) and the tension members (8) is arranged between the walls (5, 6), which length of material (7) or plastic film separates the soft ground (1) from the fill (4), **characterised in that** the walls are driven deep into the ground (1) and composed from steel profiles, sheet piles or poles and that the tension members are flexible tension members (8), in particular cables, thread bundles, chains, strips.

2. Method according to Claim 1, **characterised in that** the separating length of fabric (7) and the high-strength tension members (8) are connected to one another.

3. Method according to Claim 1, **characterised in that** the tension members (8) are warp-knitted or sewn onto the separating lengths of fabric (7).

4. Method for stabilising a soft, pliable ground (1) for a dam to be filled up or a heap, **characterised in that** walls (5, 6) which are resistant to bending are erected at the boundary of the planned fill (4) for formation of the dam or the heap on at least two opposing sides of the planned fill and, at the height of the surface (3) of the soft ground (1), high-strength geosynthetic lengths (78) are laid out wrinkle-free on the soft ground (1) and are connected to the walls (5, 6) in as rigid a manner as possible, **characterised in that** the walls are driven deep into the ground (1) and composed from steel profiles, sheet piles or poles and that the high-strength geosynthetic lengths (78) form flexible tension members (8) and form an impervious separating length of fabric (7).

5. Method according to Claim 4, **characterised in that** the high-strength geosynthetic lengths (78) are woven fabrics, the warp threads of which are axially rigid and form the flexible tension members (8) and the weft threads make the woven fabric a sufficiently impervious separating length of fabric (7).

6. Method according to any one of Claims 1 to 5, **characterised in that** the steel profiles, sheet piles or poles of the walls (5, 6) are run down into the solid ground (2).

7. Method according to any one of Claims 1 to 6, **characterised in that** the walls (5, 6) which are resistant to bending are arranged in a rectangle, square or circle, wherein the tension members running from wall to wall intersect.

8. Method according to any one of Claims 1 to 7, **characterised in that** inner profiles (9) running longitudinally approximately at the height of the surface (3) of the soft ground (1) on the inner sides of the walls (5 and 6) are fastened, on which inner profiles (9) the ends of the separating lengths of fabric (7) and of the tension members (8) or of the high-strength geosynthetic lengths (78) are fastened.

9. Method according to Claim 8, **characterised in that** load-distributing outer profiles (10) are arranged at the height of the longitudinally running inner profiles (9) on the outer sides of the walls (5 and 6), which outer profiles (10) are connected to the inner profiles (9) by means of screws (11) or rivets.

10. Method according to Claim 8, **characterised in that** U-shaped brackets (12) are placed over the walls (5 and 6) projecting out of the soft ground, which brackets (12) bear the inner profile (9) on their inner arms (13) and are supported with their outer arms (14) on the outer sides of the walls (5 and 6).

11. Method according to any one of Claims 9 to 10, **characterised in that** the inner profile (9) is a rail on which the ends of the separating length of fabric (7) and of the tension members (8) or of the geosynthetic length (78) are fastened by clamping.

12. Method according to any one of Claims 1 to 11, **characterised in that** at least one end of the separating lengths of fabric (7) and of the tension members (8) or of the high-strength geosynthetic length (78) are fastened on the inner profiles (9) by wrapping of the inner profiles (9).

13. Method according to Claim 12, **characterised in that** the inner profile (9) is a tube which is mounted rotatably, and can be fixed about, its longitudinal axis.

14. Unit, comprising a ground, stabilized by the method according to any one of Claims 1 to 3 and 6 to 13, and a dam or a heap, wherein walls (5, 6) which are resistant to bending on both sides of the fill (4) which forms the dam or the heap are driven into a soft, pliable ground (1) and both walls (5, 6) are connected at the height of the surface (3) of the soft ground (1) via high-strength tension members (8) in as rigid a manner as possible and the tension members (8) and the surface (3) of the soft ground (1) between the walls (5 and 6) is covered by a separating length of fabric or plastic film (7), **characterised in that** the walls are composed from steel profiles, sheet piles or poles and that the tension members are flexible.

15. Unit, comprising a ground, stabilised by the method according to any one of Claims 4 to 13 and a dam or a heap, **characterised in that** the separating length of fabric (7) and the high-strength, flexible tension members (8) are formed by a geosynthetic length (78).

## Revendications

1. Procédé de stabilisation d'un terrain meuble et déformable (1) pour un barrage à remblayer ou une terre-plein, dans lequel, à la limite du remblai prévu (4) en vue de la formation du barrage ou du terre-plein, sur au moins deux côtés opposés du remblai prévu, sont érigées des parois (5, 6) résistant à la flexion, et au niveau de la surface supérieure (3) du terrain meuble (1), des tirants très résistants parallèles les uns aux autres sont étalés sur le terrain meuble (1), et sont reliés aux parois (5, 6) de manière aussi inflexible que possible, et une bande de tissu (7) ou une feuille synthétique est mise en place entre les parois (5, 6), en s'étendant sur la surface supérieure (3) du terrain meuble (1) et les tirants (8), qui sépare le terrain meuble (1) du remblai (4), **caractérisé en ce que** les parois sont enfoncées profondément dans le sol, et sont constituées de profilés en acier, de palplanches ou de pieux, et **en ce que** les tirants (78) sont des tirants résistants à la flexion (8), en particulier des câbles, des faisceaux de fils, des chaînes ou des bandes.

2. Procédé selon la revendication 1, **caractérisé en ce que** la bande de tissu de séparation (7) et les tirants très résistants (8) sont reliés entre eux.

3. Procédé selon la revendication 1, **caractérisé en ce que** les tirants (8) sont cousus ou cousus selon un procédé Rachel sur les bandes de tissu de séparation (7).

4. Procédé de stabilisation d'un terrain meuble et déformable (1) pour un barrage à remblayer ou une terre-plein **caractérisé en ce qu'**à la limite du remblai prévu (4) en vue de la formation du barrage ou du terre-plein, sur au moins deux côtés opposés du remblai prévu sont érigées des parois (5, 6) résistant à la flexion, et au niveau de la surface supérieure (3) du terrain meuble (1), des bandes géosynthétiques très résistantes (78) sans plis sont étalées sur le terrain meuble (1), et sont reliées aux parois (5, 6) de manière aussi inflexible que possible, **caractérisé en ce que** les parois sont enfoncées profondément dans le sol, et sont constituées de profilés en acier, de palplanches ou de pieux, et **en ce que** les bandes géosynthétiques très résistantes (78) forment des tirants résistants à la flexion (8), et une bande de tissu de séparation serrée (7).

5. Procédé selon la revendication 4, **caractérisé en ce que** les bandes géosynthétiques très résistantes (78) sont en tissu, dont les fils de chaîne sont rigides en traction, et forment les tirants résistants à la flexion (8), et les fils de trame du tissu forment une bande de tissu de séparation (7) suffisamment serrée.

6. Procédé selon l'une quelconque des revendications 1 à 5, **caractérisé en ce que** les profilés en acier, ou les palplanches ou les pieux des parois (5, 6) sont enfoncés dans la terre ferme (2).

7. Procédé selon l'une quelconque des revendications 1 à 6, **caractérisé en ce que** les parois résistant à la flexion (5, 6) sont disposées en rectangle, en carré ou en cercle, de sorte que les tirants s'étendant de paroi à paroi se croisent.

8. Procédé selon l'une quelconque des revendications 1 à 7, **caractérisé en ce qu'**à peu près au niveau de la surface supérieure (3) du sol meuble (1) sont fixés des profilés intérieurs (9) s'étendant longitudinalement sur les côtés intérieurs des parois (5 et 6), sur lesquels sont fixées les extrémités des bandes de tissu de séparation (7) et les tirants (8), ou plutôt les bandes géosynthétiques très résistantes (78).

9. Procédé selon la revendication 8, **caractérisé en ce que** des profilés extérieurs (10) de répartition de charge vont être agencés sur les côtés extérieurs des parois (5 et 6) au niveau des profilés intérieurs (9) s'étendant longitudinalement, qui vont être reliés aux profilés intérieurs (9) au moyen de vis (11) ou de rivets.

10. Procédé selon la revendication 8, **caractérisé en ce que** des étriers en forme de U (12) sont mis en place sur les parois (5 et 6) faisant saillie du sol meuble, qui supportent le profilé intérieur (9) au niveau de leurs branches intérieures (13), et qui appuient à l'aide de leurs branches extérieures (14) sur les côtés extérieurs des parois (5 et 6).

11. Procédé selon l'une quelconque des revendications 9 et 10, **caractérisé en ce que** le profilé intérieur (9) est un rail sur lequel les extrémités de la bande de tissu de séparation (7) et les tirants (8) ou la bande géosynthétique (78) sont fixés par serrage.

12. Procédé selon l'une quelconque des revendications 1 à 11, **caractérisé en ce qu'**au moins une extrémité des bandes de tissu de séparation (7) et les tirants (8) ou la bande géosynthétique (78) sont fixés sur les profilés intérieurs (9) en passant autour des profilés intérieurs (9).

13. Procédé selon la revendication 12, **caractérisé en ce que** le profilé intérieur (9) est un tube qui est monté de manière rotative autour de son axe longitudinal, et pouvant être fixé.

14. Ensemble consistant en un terrain, stabilisé par l'intermédiaire du procédé selon l'une quelconque des revendications 1 à 13 et 6 à 13, et un barrage ou un terre-plein, dans lequel des parois rigides en flexion (5, 6) sont enfoncées des deux côtés du remblai (4) formant le barrage ou le terre-plein dans un terrain meuble et déformable, et les deux parois (5 et 6), au niveau de la surface supérieure (3) du terrain meuble (1), sont reliées de manière aussi inflexible que possible par l'intermédiaire de tirants très résistants (8), et les tirants (8) et la surface supérieure (3) du terrain meuble (1) sont recouverts entre les parois (5 et 6) d'une bande de tissu ou d'une feuille synthétique de séparation (7), **caractérisé en ce que** les parois sont assemblées à partir de profilés d'acier, de palplanches ou de pieux, et les tirants sont souples.

15. Ensemble consistant en un terrain, stabilisé par l'intermédiaire du procédé selon l'une quelconque des revendications 4 à 13, et un barrage ou un terre-plein, **caractérisé en ce que** la bande de tissu de séparation (7) et les tirants souples en flexion très résistants (8) sont formés à partir d'une bande géosynthétique (78).
